Europäisches Patentamt

(19) European Patent Office

Office européen des brevets

(11) Publication number: **0 187 503**
**A2**

(12) # EUROPEAN PATENT APPLICATION

(21) Application number: **85309181.7**

(22) Date of filing: **17.12.85**

(51) Int. Cl.⁴: **H 04 L 11/16**
**G 06 F 13/36**

(30) Priority: **31.12.84 US 688102**

(43) Date of publication of application:
**16.07.86 Bulletin 86/29**

(84) Designated Contracting States:
**BE DE FR GB IT SE**

(71) Applicant: **XEROX CORPORATION**
**Xerox Square - 020**
**Rochester New York 14644(US)**

(72) Inventor: **Ballard, Terry L.**
**521 Chestnut Drive**
**Grand Praire Texas 75051(US)**

(74) Representative: **Goode, Ian Roy et al,**
**European Patent Attorney c/o Rank Xerox Limited Patent**
**Department Rank Xerox House 338 Euston Road**
**London NW1 3BH(GB)**

(54) **Shared line communication system.**

(57) A small low-cost local area network for use within an electronic sybsystem for allowing communication between distributed processors is described. The processors are coupled through a single shared line, and the higher priority processor is allowed to secure the line in case of contention. All contending processors are forced to start transmission at the same time by waiting a predetermined delay time since the last received pulse before starting transmission. Every processor first transmits its own number, the transmissions are ORed on the shared line, and every processor compares its transmitted signal against the signal on the line. The processor transmitting a low will not sense the collision and will continue, but the processor transmitting a high will sense the collision and back off. Thus, the processor with the lower number will have a higher priority. Priority can also be established by having the lower priority processor wait a longer time since the last received pulse before transmitting.

EP 0 187 503 A2

./...

Croydon Printing Company Ltd

FIG. 1A

**PRINTER PWA**

21
8051
PRINTER PROC

TXD
RXD
INTO
LOGIC
12
17
14
15
Vcc

10

**POWER SUPPLY MODULE**

SUPPLY VOLTAGES TO ALL MUDULES

**KEYBOARD PWA**

11
8051
KEYBOARD DISPLAY PROC

TXD
RXD
INTO
LOGIC
12
13
14
15
Vcc

**LCD & STATUS PANEL**

10

SERIAL LINK 375 KBS ASYNCRONOUS
HALF DUPLEX

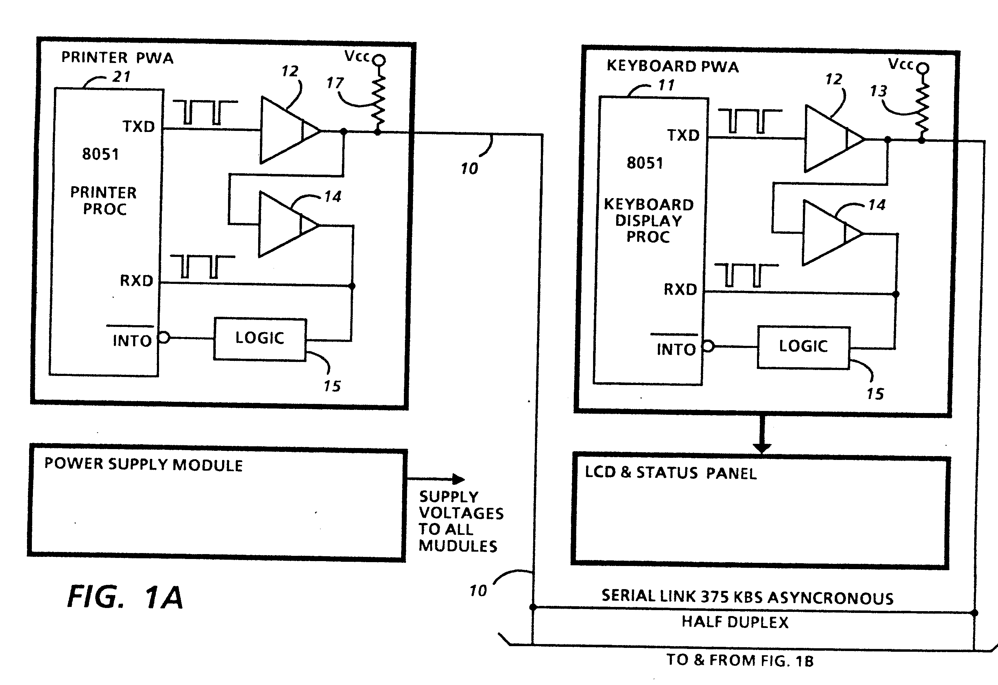

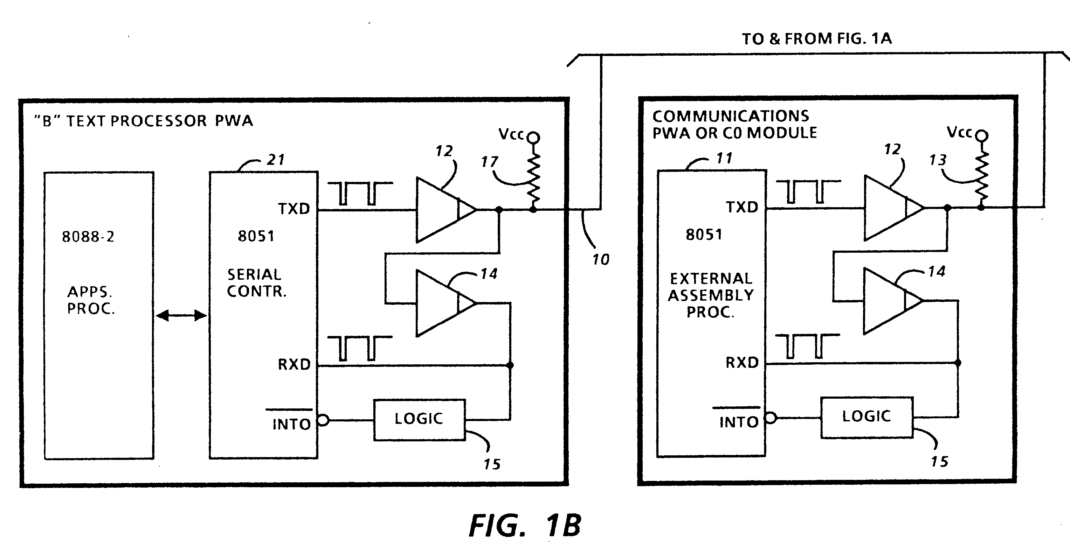

TO & FROM FIG. 1B

Shared Line Communication System

This invention relates to a communication system having a shared line for coupling data between two or more modules, each module comprising a transmitter (TXD) and a receiver (RXD), and means responsive to the receiver for preventing the start of transmission of data onto the line until after a delay has elapsed since the last received pulse.

To allow communications between a variety of terminals, various configurations of local area networks have been designed. The terminals include computers of all sizes, workstations, file servers and word processors. Also, the size of the network is variable. A single line typically allows communication between terminals in a building, and communication links can connect lines between cities.

A well known local area network is the Ethernet system which comprises a single shared line between terminals. When a collision is detected, both terminals back off for a random time interval and try again. All terminals have equal priority.

The Ethernet system can be adapted to enable communication between processors in a large hardware system with distributed processing. An example is a large copier or duplicator with five or more processors, each dedicated to a different function. A difference between this adaptation and the usual local area network is that the communication system for controlling hardware must allow for operation in real time. It has been determined that if each terminal is wired into a central clock, and if it is a statistical certainty that the communication bandwidth is high enough for all messages to arrive at the destinations before they are required, regardless of collisions, then the system will be suitable for real time operation.

This system can be justified for a large hardware terminal such as a large high-speed duplicator, but not for a small terminal such as a typewriter, which cannot absorb its complexity and cost.

However, small systems also have distributed processing, and these processors must communicate. Thus, there is a need for a low cost, real time, shared line communication system.

The present invention is intended to provide such a system, and provides a communication system of the kind specified which is characterised by means for prioritising the modules so as to resolve collisions in favour of the module with the highest priority.

The shared line communication network described herein connects four modules or processors within an electronic typewriter with a single communication line, but does not have a system clock wired to each module. This saves the cost of the additional wiring and also reduces radiated radio frequency noise problems.

In addition, in case of collision, the module with the higher priority continues to transmit in most cases, and the one with the lower priority backs off until the line is clear again.

One advantage of this procedure is that there are fewer retransmissions, resulting in the system communicating a greater amount of data for a given bandwidth.

The priority algorithm is easily implemented, and can be explained as follows: Assume 1) a system with four processors having the following binary descriptions, 000, 100, 110 and 111, 2) that two terminals start to transmit at the same time, 3) that the first transmitted word is the binary terminal designation number, 4) that the shared line is driven by collector ORing so that a low from any transmitter pulls the entire line down, 5 ) that a low signal is defined as "0" bit, and 6) that each terminal detects a collision by comparing the transmitted signal to the signal on the shared line. Now, if terminal 000 and 100 start to transmit, terminal 100 will see the collision (it transmits 100 and receives 000) and will back off while terminal 000 will not see the collision (it transmits 000 and receives 000) and will continue to transmit. In this way, the system can operate in real time, and the function that has the higher priority transmits its entire message first.

This teaches away from the typical prior art LAN where all terminals have equal priority. In the prior art, equal priority is required so that large numbers of terminals in a building can be added or removed at will without the added problem of address assignment. Also, in such a system, real time operation is not required, so that equal priority, and delays due to collision, are tolerated.

A problem with the priority system in this invention is that the colliding transmissions must start at the same time. Unsynchronized station designation bits will not allow the priority mechanism to operate properly, all modules will see a collision, and no module will secure the line. In a hypothetical system where clock lines are wired to all processors, synchronization could be more easily accomplished. In this invention, the same result is accomplished without the clock lines by each module monitoring the shared line, and delaying the start of the next transmission by a predetermined time period from the end of the last transmission. In this way, all contending transmissions will start at the same time. There is also the delay caused by the transmission time of a message on the shared line between distant modules to consider in large systems but in a small terminal such as a typewriter, the transmission time is insignificant.

This invention therefore provides low cost, real time, shared line communication for a small hardware system having distributed processing.

A communication system in accordance with the invention will now be described, by way of example, with reference to the accompanying drawings, in which:-

Figure 1 is a block diagram of the overall typewriter system.

Figure 2 is a detailed schematic diagram of the interface between the local processor and the shared line.

The described embodiment of this invenion is a typewriter having the general organization as shown in Figure 1. Each of four main modules, printer, keyboard, text processor and communications, is controlled by a processor which is coupled to the shared line 10 through an 8051 communication controller 11.

The transmission from the controller 11 is supplied through line driver 12 to the shared line 10, an·open collector line with a pull-up resistor 13 for each driver 12.

As a result of this collector ORing, a low transmitted by any one driver 12 will be felt at all receiver gates 14. A collision is defined as a non-equality between the transmitted data at the controller transmitted data pin TXD and the data received data pin RXD.

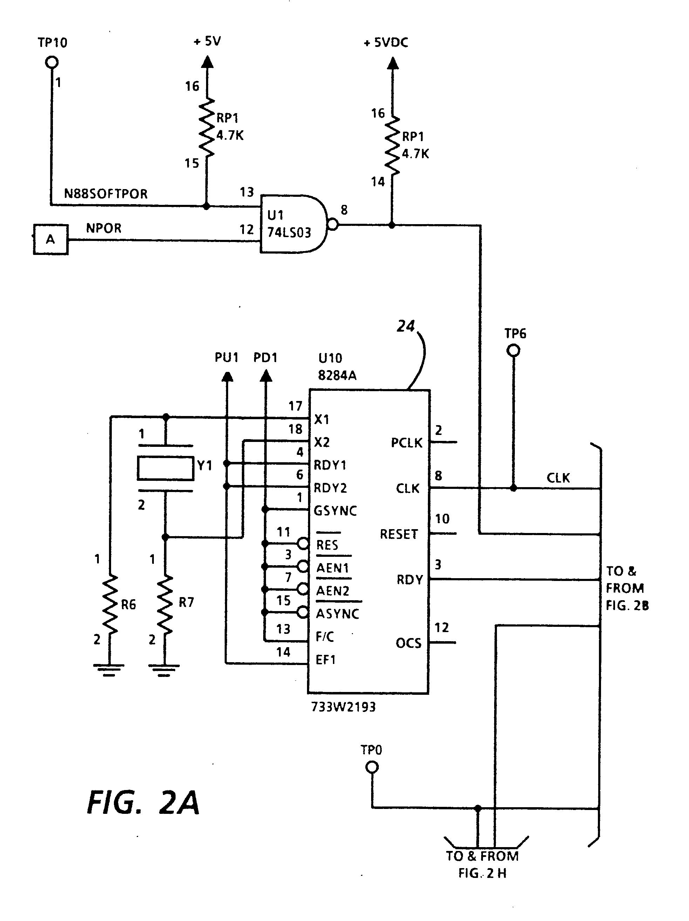

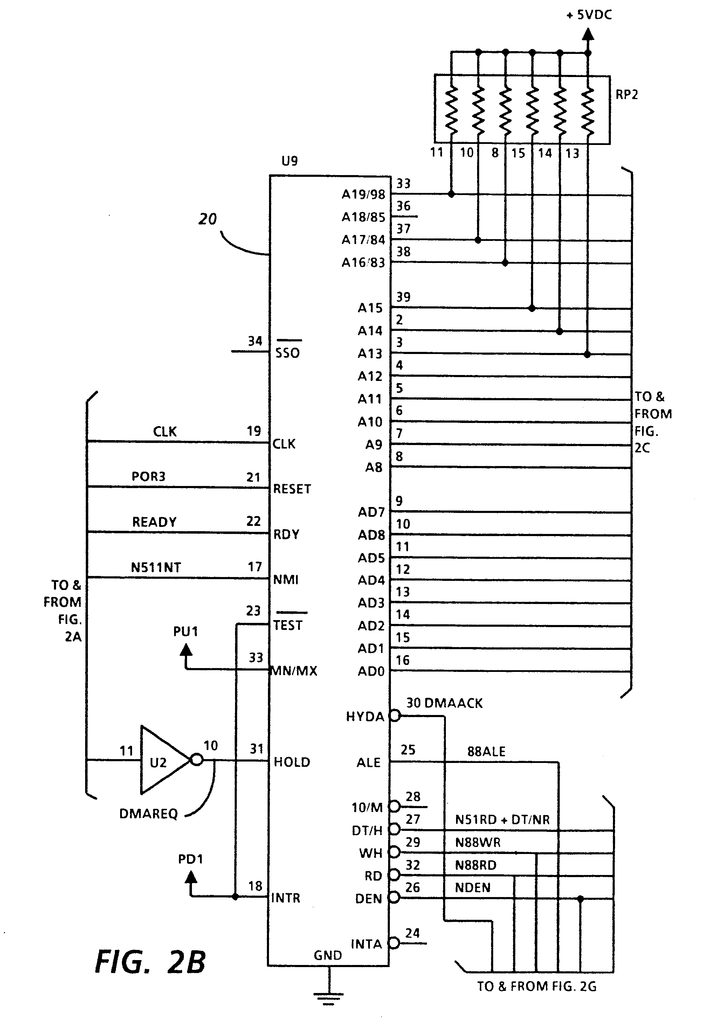

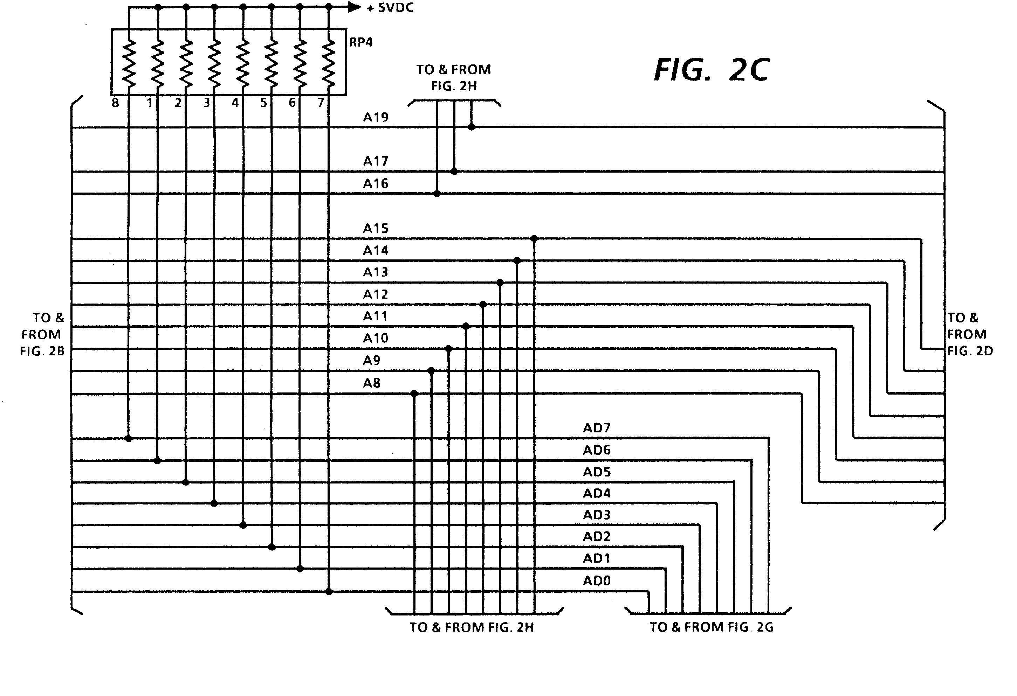

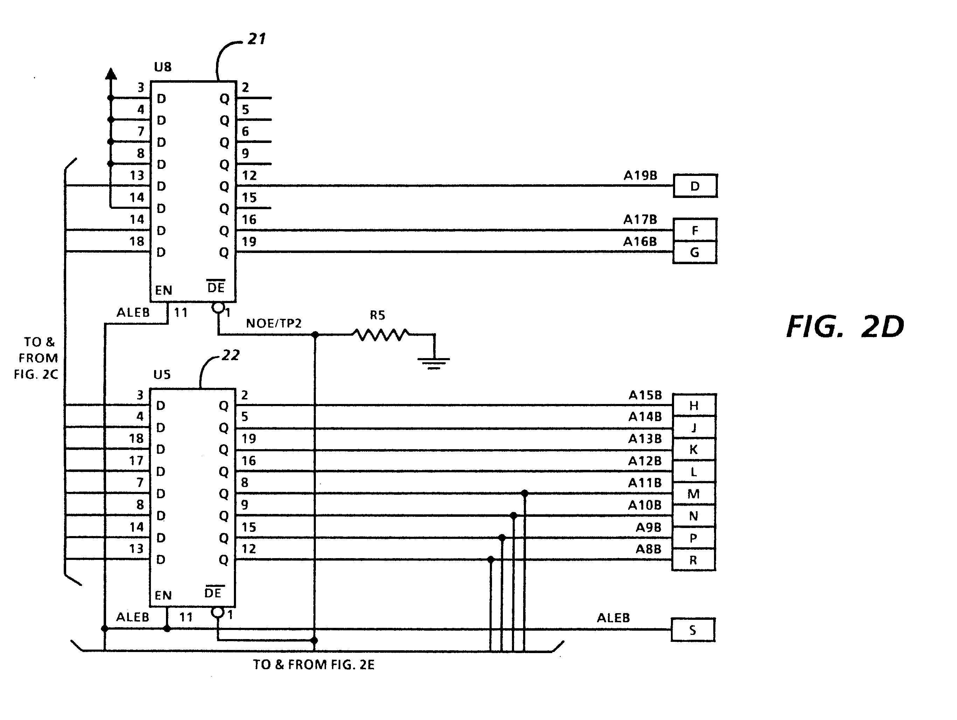

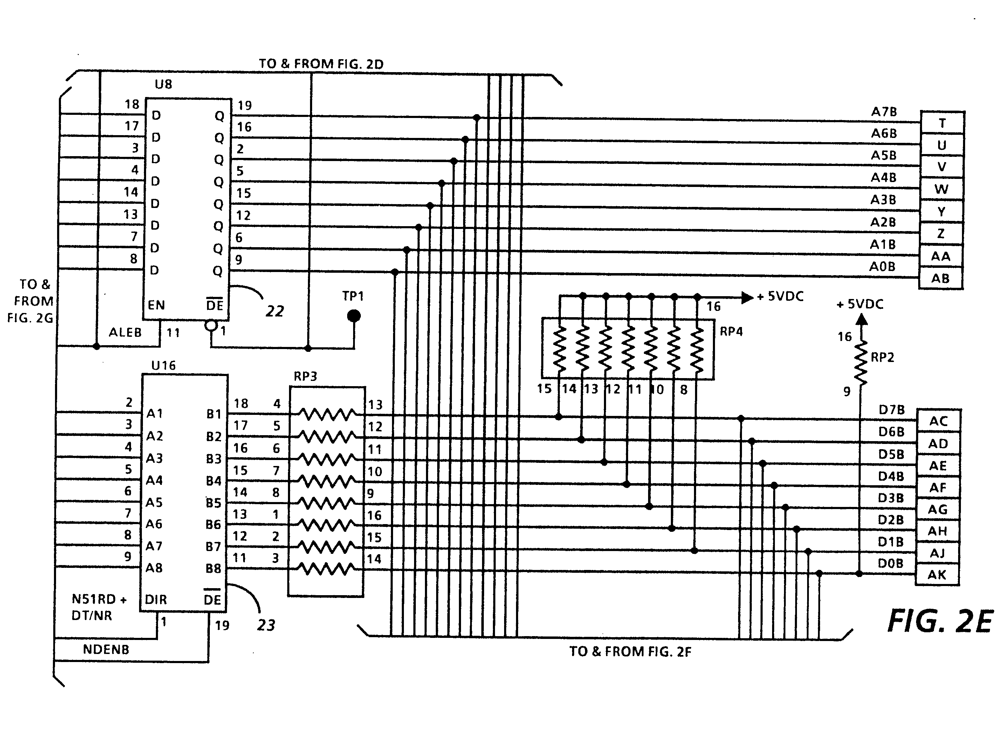

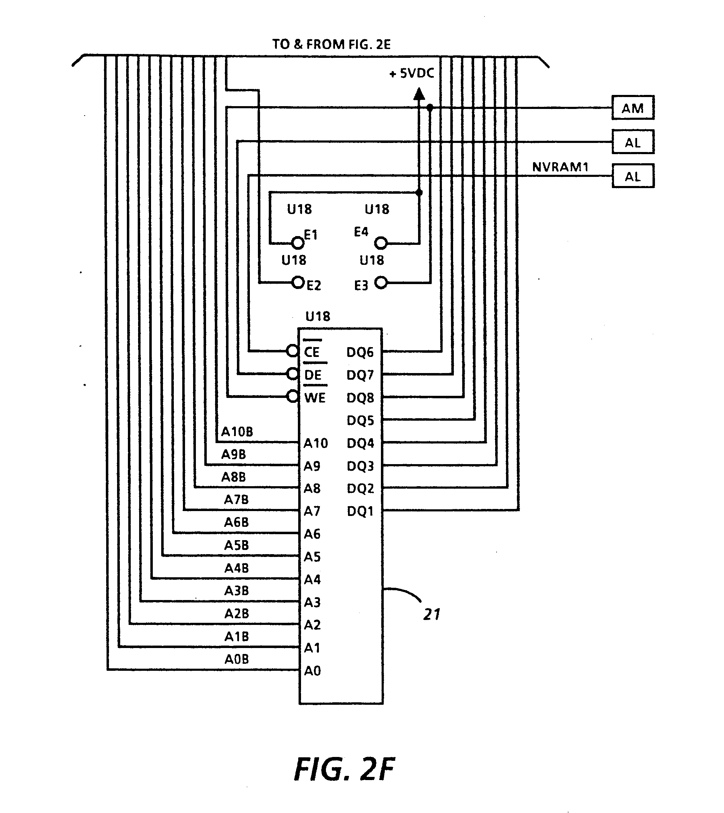

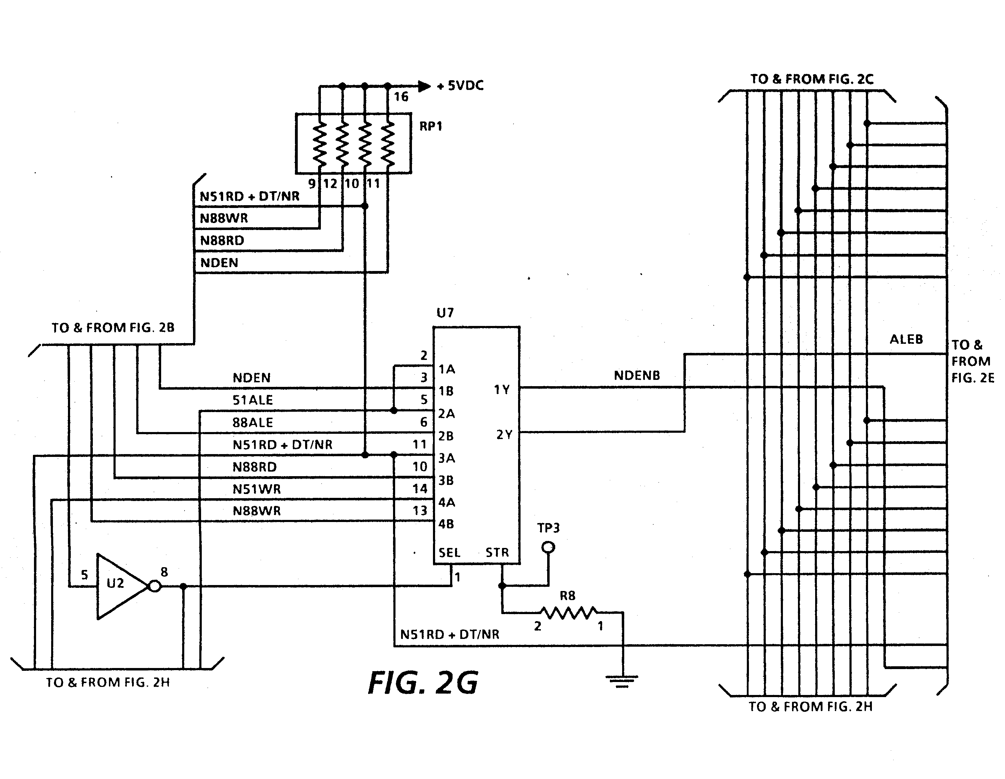

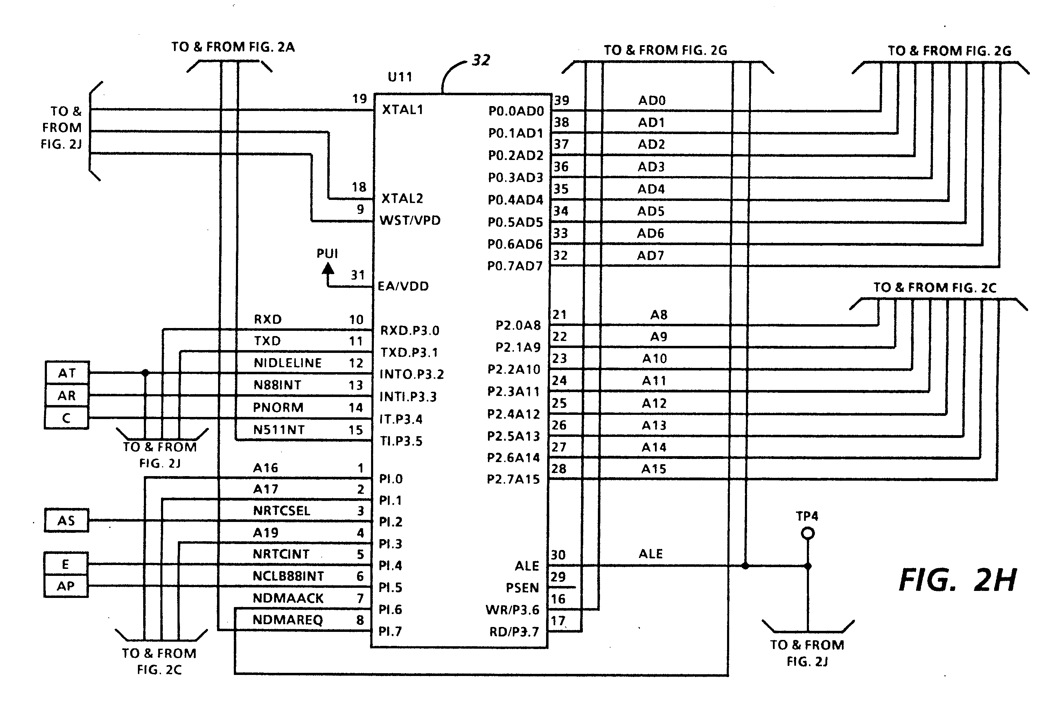

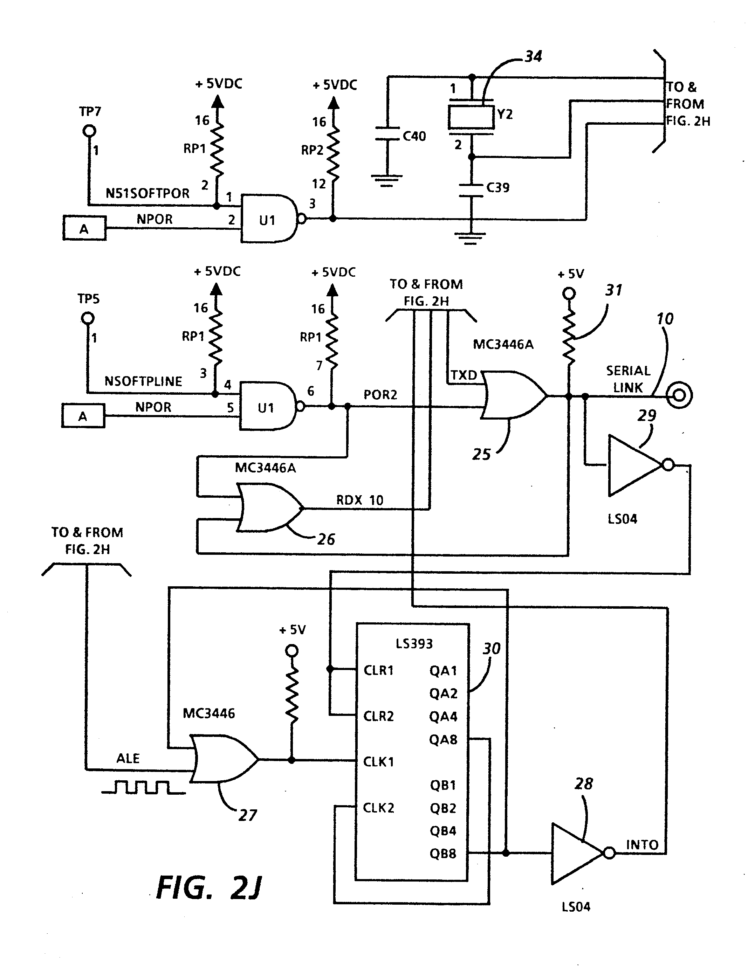

All received pulses are coupled to the logic block 15 which is basically a counter that is constantly reset to zero by the received pulses. At the end of a transmission, all four logic 15 counters start to count a number of clock pulses, which are generated locally in each module, and at a predetermined count, an output is sent to each controller 11 on the INTO line to enable the next transmission. This circuitry is shown in more detail in Figure 2. The 8088 processor 20 shares a 2016 memory device 21 (2K by 8 bits) with the communication controller 20 for local storage. The address lines are labelled AOB through A10B at the memory device 21 and ADO through AD7 and A8 through A10 at the processor 20. Latches 22 hold address information output from the processor 20, and buffer 23 controls data direction and flow. The clock for the processor is generated by clock generator 24, an 8284 device.

The priority logic is controlled by gates 25-30. The transmitted data from the controller 32 pin TXD is tied to an open collector noninverting line driver OR gate 25, the output of gate 25, an MC3446A device or equivalent, being connected to the shared line 10. Fifty ohm pull-up resistor 31 is tied to plus five volts. This transmission is coupled back to OR gate 26 and to the receiver pin, RXD, of the controller 32. A collision is defined as a non-equality between the data on the TXD and RXD pins.

In this sytem, once a processor secures the shared line, it will continue to transmit information until it finishes its transmission. During this time, all other processors wait. At the end of transmission, all other processors that are waiting to transmit wait a predetermined amount of time after the last transmitted pulse before transmitting. This delay is timed by device 30, an LS393 device, which is implemented as a counter. Clock pulses arriving on the ALE line clock the counter 30.

The first stage overflows at output pin QA8 and this overflow pulse is used to clock the second stage. The final overflow output at QB8 is then used as the delayed pulse. This pulse is output through inverter 28 to enable the controller 32 to start transmitting, and also disables additional pulses coupled through gate 27. Finally, when there is activity on the line from any transmitter, it is coupled through gate 29 to clear both halves of the counter 30, resetting it to zero. Then, at the end of transmission the count resumes, delaying the next transmission by the predetermined amount. The actual delay in the described system is 64 microseconds. As described above, this time delay must be accurate so that all stations start transmitting at the same time. The crystal controlled 8051 device is suitable for this purpose.

The built-in delay is the major difference between this system and the prior art. In all other shared line collision avoidance systems, random delays are used to make it less likely for two stations to begin a transmission at the same time. In this system, the various stations are forced to start at the same time. This allows the assignment of priorities between processors, and is feasible because of the small number of processors involved.

The system designer may decide to design two or more processors with the same priority. For example, if the two processor designators were 101 and 110, and if the entire designation is received before the determination of a collision is decided, then both processors will see the collison and back off. This is useful where the priority between the two processors is a function of other factors. In this case, the software internal to each processor can determine the momentary priority, the lower priority processor waiting a longer time, controlled by the software, before attempting another transmission.

In the event that the typewriter is upgraded by the addition of a disk drive, additional memory, etc., outside the typewriter case, the shared line may be extended to connect to them. Here again the single wire allows attachment with a minimum of cost and rf radiation.

A typical transmission starts with the processor 20 loading data into memory 21 and then signaling the controller that the data is available for transmission. Then, the controller 32 will access the data, eight bits in parallel, on lines ADO-7 through buffer 23, and transmit it serially on the TXD line. Similarly, received serial data is received at the controller 32 on the RXD line and is converted into eight bit parallel data for storage.

The remainder of this specification is a detailed description of the software and protocols used in the described embodiment, beginning with a definition of the terms.

A frame is one serial transmission of a specific length, all frames are 11 bits consisting of 1 start bit, 1 stop bit, 8 data bits, and 1 bit which is used to interrupt all devices when set. This bit is called transmitted bit 8.

A device address frame is a specific number which results in a predetermined data pattern when transmitted. The address assigned to a particular device will determine the priority or degree of difficulty that the device will have in securing the line.

A source/destination frame is the second byte sent in any transmission which defines where the data is to be coming from and where it is to be going. This frame will have transmitted bit 8 set to signal a SRC/DES frame. Transmitted bit 8 being set will interrupt all devices provided they have their SM2 bits set for automatic wake up.

A line/link is the single wire which all devices are using to communicate.

A packet is a number of frames which are sent sequentially with a minimum duration from frame to frame of less than the duration of two frames.

A packet comprises, in this order, a device address frame, a source/destination frame, an unlimited number of data or command frames which are defined by the user, and one or two end frames containing a check sum. A detailed set of programming rules follows:

I. Ground Rules

1. Baud Rate: 375 K-bits/sec.

2. 11 Bit Frames:

      o Start Bit  1

      o Data       8

      o 8th bit    1

      o Stop bit   1

This makes the transfer rate:

$\cdot$ 375 x 1024 / 11 = 34 K-bytes/sec,

or 2.6 micro-sec/bit, or 28.6 micro-sec/frame.

| Field | Frame | Description |
|---|---|---|
| 1 | 0 | Device Address. Used by the sender to compete for the line. This frame is NOT part of the message. |
| 2 | 1 | Source/Destination. This is the only frame that is sent with the 8th bit set to 1, which will cause all parties listening to the line |

interrupted.

| | | |
|---|---|---|
| 3 | 2 | Length of fields 4 and 5. Values are 1-255-0 (0=256). |
| 4 | 3 | Command. |
| 5 | 4-258 | Data, if any. |
| 6 | Last | Check sum of fields 2 through 5. The check sum should produce a zero when fields 2 through 6 are added. This field is NOT part of the message. It is calculated on the fly during transmission. |

4.    There is a Serial Data Link not busy interrupt which is normally disabled until one needs to get on the line. Once a frame is sent on the line, it will become busy and stay busy for 2 frame's time following the last zero bit on the line.

5.    To get the line:

o    Enable not busy interrupt, and when interrupted:

o    Enable reception (vs listening to the line).

o    Send your own device address (it is prioritized) out on the line.

o    Read back and compare with the device address just sent.

o    If they match, you have the line.

o    Otherwise another module of higher priority must have the line. Go back to listen to the line mode.

6.    Once you get the line you must first disable reception and start sending your message. Be sure that there is no more than 2 frame's time elapsed between frames.

7.    Since there is no throttle on the receiver side once the packet starts, the transmitter should not send frames faster than the receiver can receive.

II.    Programming considerations

- 8 -

1.     Power-up/Reset Initialization:

    o     Set Baud rate to 375 kbs.

    o     Set serial port to mode 2.

    o     Enable multiprocessor communication feature.

    o     Enable serial reception.

    o     Disable data link not busy interrupt.

Example:

```
MOV    PCON, No. 80H    ;375 kbs
MOV    SCON, No. 0B0H   ;Mode 2,SM2,REN
CLR    EXO              ;INTO is the not busy
                        interrupt
```

The above setting is the "listen to the line" mode. You will get a serial interrupt only if someone sends the SRC/DES frame (which comes with the 8th bit set to 1).

2.     To get the line and transmit a packet:

```
SETB   EXO              ;Enable not busy
                        interrupt
```

And,

NOT_BUSY_INTERRUPT:

```
CLR    SM2              ;Needs to read back
                        MY_DEVICE_ADDRESS
JB     NBUSY,INT_NBUSY;This test is to
                        minimize skew.
SETB   SM2              ;The line is already
                        busy
RETI                    ;Get out
INT_N6BUSY
MOV    SBUF, No. MY_DEVICE_ADDRESS;Compete
                        for the line
JNB    NBUSY,$          ;Wait so that you will
                        not be interrupted
                        again
```

- 9 -

RETI

You should get a serial interrupt with TI=1 and just a few micro seconds later, RI=1. Under this scheme, this is the only time that you will ever have both TI and RI set to 1. You should then:

```
        MOV     A,SBUF          ;Read back
        CJNE    A, No.MY_DEVICE_ADDRESS,NO_LINE
```

drops here when you have the line, do this:

```
        CLR     EXO             ;No need for not busy
                                interrupt
        CLR     REN             ;You are transmitting
                                no reception
        SETB    TB8             ;Set the 8th bit to
                                wake up everyone
        MOV     A,SRC/DES       ;Get
                                source/destination
```

There should be a delay of about 2 frame's time (57 micro-sec) between sending out the device address and SRC/DES frames. This is to avoid problems caused by "collision" (described later).

```
        MOV     SBUF            ;Send it
        RETI
```

After the SRC/DES is sent you will get a transmit interrupt, be sure to clear the 8th bit:

```
        CLR     TB8
```

now you can send your next byte and repeat the procedure until all is sent then:

```
        SETB    SM2             ;Listen to the line
        SETB    REN             ;Enable reception
```

If you lost getting the line you need to do:

NO_LINE:

```
        SETB    SM2             ;So that you're listening
                                to the line
```

Note that EXO is still enable, you'll get your chance later when the line is free.

3.      Reception:

        When someone sends a SRC/DES frame (comes with

8th bit set) you will get RB8=1. You need to check if the DEStination is you. If so you need to do this:

```
CLR      SM2               ;So that you will get
                            interrupted
                          ;on following bytes.
```

When you finished receiving:

```
SETB     SM2               ;So that you are
                            listening again
```

If the DEStination is not for you, you need do nothing.

4.       Collision:

Collision occurs when two or more devices send out their device addresses to compete for the line when the line is not busy. One cannot expect all such devices to start transmitting simultaneously. Therefore, there is always a certain amount of skewing of frames. Testing the "NBUSY" pin in the NOT_BUSY_INTERRUPT minimizes the skew to about 2 bit times, and this is the best we can do. At this amount of skewing, the 8th bit of the frame that is behind can cause a false start bit and if a SRC/DES frame follows shortly, the problem is magnified. To avoid problems caused by collision, one needs to do the following:

o       During the NOT_BUSY_INTERRUPT make sure that the line is free before sending out the device address.

o       Make sure that there is about 2 frame time (57) micro-sec) delay between the device address and SRC/DES frames.

o       Avoid using FF (hex) as a device address.

Claims:

1.      A communication system having a shared line (10) for coupling data between two or more modules, each module comprising a transmitter (TXD) and a receiver (RXD), and means (15) responsive to the receiver for preventing the start of transmission of data onto the line until after a delay has elapsed since the last received pulse, characterised by means for prioritising the modules so as to resolve collisions in favour of the module with the highest priority.

2.      A communication system having a shared line for coupling data between two or more modules said data beginning with a module identification number which also signifies the priority of said module, each module comprising a transmitter and receiver, means within each of said modules for allowing the module with the higher priority to take control of the line comprising:

        means, responsive to said receiver, for preventing the start of transmission of data onto said line until a predetermined delay has elapsed since the last received pulse, so that the contending transmitters will start transmitting at the same time,

        means for ORing the transmission onto the shared line so that a low (or high) output from any one terminal will drive the entire line low (high), and

        means for comparing transmitted and received data, and for terminating said transmission upon the receipt of at least one low (high) data bit at a time when a high (low) bit was transmitted.

3.      The system of Claim 2 further comprising a clock generator, and wherein said means for preventing comprises a counter which starts to count clock pulses after the last data pulse from the line is received, the predetermined delay being a predetermined count of clock pulses.

4.      The system of Claim 2 wherein said means for preventing further comprises means for varying said predetermined delay in real time so that a momentarily higher priority module will be allowed to secure the line first.

- 12 -

5.     The system of any one of claims 2 to 4 wherein said means for comparing will receive the entire first transmitted number before making said comparison.

6.     A communication system having a shared line for coupling two or more modules, each module comprising a transmitter and receiver, means within each of said modules for allowing the module with the higher priority to take control of the line comprising:

means, responsive to said receiver, for preventing the start of transmission of data onto said line until a predetermined delay has elapsed since the last received pulse, the predetermined delay being different for different modules, the higher priority module having the shorter delay so that the higher priority of two contending modules will secure the line.

7.     A method of coupling data between two or more modules of a communication system, each module comprising a transmitter and a receiver, comprising preventing the start of transmission of data onto the line until after a delay has elapsed since the last received pulse, and characterised by prioritising the modules so as to resolve collisions in favour of the module with the highest priority.

8.     The method of allowing a module comprising a transmitter and receiver for communicating with other modules on a shared line to determine its priority in relation to a contending module wherein said data being communicated begins with a module identification number which also signifies the priority of said module, the steps comprising:

preventing a transmission until a predetermined time delay since the last received pulse,

ORing said transmission onto said line,

comparing said transmitted and received data, and

terminating said transmission if the transmitted and received data are not equal.

9.     The method of Claim 8 wherein said comparison between said transmitted and received data occurs after the first number is received.

10.    The method of Claim 8 or Claim 9 wherein said predetermined delay can be varied in real time so that a momentarily higher priority module with a shorter delay can secure the line.

11.    A communication system having a shared line for coupling two or more modules, each module comprising a transmitter and receiver, the method for allowing the higher priority module to secure the line comprising the steps of:

preventing transmission of data onto the line until a time delay after the last pulse was received, and

providing each module with a different time delay so that the higher priority module with the shorter time delay will secure the line before the other contending module.

FIG. 1A

FIG. 1B

FIG. 2A

0187503

FIG. 2B

0187503

# FIG. 2C

+ 5VDC

RP4

TO & FROM FIG. 2H

TO & FROM FIG. 2D

TO & FROM FIG. 2G

TO & FROM FIG. 2H

TO & FROM FIG. 2B

A19
A17
A16
A15
A14
A13
A12
A11
A10
A9
A8

AD7
AD6
AD5
AD4
AD3
AD2
AD1
AD0

7
6
5
4
3
2
1
8

FIG. 2D

**FIG. 2E**

TO & FROM FIG. 2E

+ 5VDC

AM

AL

NVRAM1 — AL

U18    U18
    E1    E4
U18    U18
    E2    E3

U18

CE    DQ6
DE    DQ7
WE    DQ8
      DQ5
A10B  A10  DQ4
A9B   A9   DQ3
A8B   A8   DQ2
A7B   A7   DQ1
A6B   A6
A5B   A5
A4B   A4
A3B   A3
A2B   A2
A1B   A1
A0B   A0

21

FIG. 2F

FIG. 2G

0187503

*FIG. 2H*

**FIG. 2J**